# EUROPÄISCHE PATENTANMELDUNG

(11) **EP 1 316 478 A2**
(43) Veröffentlichungstag der Anmeldung: **04.06.2003**
(21) Anmeldenummer: 03000935.1
(22) Anmeldetag: 27.04.2000
(51) Int. Cl.: B60R 16/02, H04L 29/06, G06F 17/30

(54) **Fahrzeugelektrik-Konfigurationssystem**

(30) Priorität: 09.06.1999 DE 19926206
(62) Teilanmeldung aus: 00931079.8
(71) Anmelder: DaimlerChrysler AG, 70567 Stuttgart (DE)
(72) Erfinder: Bremer, Ulrike, 52074 Aachen (DE); Kreuz, Ingo, 71083 Herrenberg (DE); Zhang, Zhongkun, 66121 Saarbrücken (DE)

(57) **Zusammenfassung**

1. Fahrzeugelektrik-Konfigurationssystem.
2.1. Die Erfindung bezieht sich auf ein Fahrzeugelektrik-Konfigurationssystem zur automatisierten Konfigurierung fahrzeugelektrischer Anlagen, die wenigstens teilweise an ein Datenbusnetzwerk angeschlossene Hardware-Komponenten und in wenigstens einem Teil derselben implementierte Software-Komponenten zur Ausführung zugehöriger Funktionalitäten umfassen.
2.2. Erfindungsgemäß ist ein fahrzeugseitig angeordneter, zentraler Istkonfigurationsdatenspeicher zum abrufbaren Ablegen eines die Istkonfiguration der jeweiligen fahrzeugelektrischen Anlage charakterisierenden Istkonfigurationsdatensatzes vorgesehen, wobei der Speicher direkt oder indirekt mit allen Hardware-Komponenten in Kommunikationsverbindung steht. Zusätzlich oder alternativ beinhaltet das System einen Topologiekonfigurierungs-Systemteil, einen Hardware-Komponentenkonfigurierungs-Systemteil und einen Fahrzeugkonfigurierungs-Systemteil zusammen mit einer graphischen Benutzeroberfläche zur menügesteuerten Benutzerführung.
2.3. Verwendung z.B. zur automatisierten kundenspezifischen Konfigurierung der fahrzeugelektrischen Anlage von Automobilen.

## Beschreibung

Die Erfindung bezieht sich auf ein Fahrzeugelektrik-Konfigurationssystem zur automatisierten Konfigurierung fahrzeugelektrischer Anlagen, die wenigstens teilweise an ein Datenbusnetzwerk angeschlossene Hardware-Komponenten und in wenigstens einem Teil der Hardware-Komponenten implementierte Software-Komponenten zur Ausführung zugehöriger Funktionalitäten umfassen. Unter Hardware-Komponenten werden hierbei vor allem die diversen Steuergeräte (häufig als ECU abgekürzt) samt zugehöriger Teile und Peripherie verstanden, wie Leitungsverbindungen, Datenbussen, Anschlüssen, Sensoren und Aktoren. Jede Software-Komponente, die eine zugehörige Funktionalität erfüllt, kann in einer oder verteilt in mehreren der Hardware-Komponenten implementiert sein.

Systeme zur automatischen Konfigurierung eines technischen Systems sollen den Aufbau des Systems unterstützen, indem sie eine im Rahmen der vorhandenen Möglichkeiten und vorgegebenen Randbedingungen hinsichtlich vorgegebener Kriterien möglichst optimale Systemkonfiguration vorzugsweise mittels einer wissenbasierten Methode ermitteln, bei der das gesamte konfigurationsrelevante Wissen in einer entsprechenden Wissensbasis-Datenbank abgelegt ist. Solche Systeme sind beispielsweise bereits zur Konfigurierung von PC-Systemen und Telefonanlagen vorgeschlagen worden, siehe zu letzterem die Veröffentlichung Uellner et al., Kundenspezifische Konfiguration von Telekommuniationssystemen - Das Projekt KIKon, Deutsche Telekom AG, Technologiezentrum Darmstadt, 1997. Zu den allgemeinen Grundlagen wissenbasierter Konfigurierung kann z.B. auch auf die Veröffentlichung A. Günter (Herausgeber), Wissensbasiertes Konfigurieren - Ergebnisse aus dem Projekt PROKON, Infix-Verlag, St. Augustin 1995 verwiesen werden.

In modernen Kraftfahrzeugen nimmt der Elektrik-/Elektronikanteil, d.h. der Anteil an elektrischen und elektronischen Komponenten, welche die fahrzeugelektrische Anlage bilden, ständig zu. Die Variantenvielfalt fahrzeugelektrischer Anlagen, wie die jeweilige Gesamtheit an elektrischen und elektronischen Komponenten vorliegend vereinfachend bezeichnet wird, ist u.a. bedingt durch verschiedene Fahrzeughersteller, verschiedene Betriebsvorschriften in unterschiedlichen Ländern und durch verschiedene Baureihen und Ausstattungsvarianten desselben Herstellers. Es besteht daher Bedarf an einem Fahrzeugelektrik-Konfigurationssystem, mit dem sich eine fahrzeugelektrische Anlage nach Kundenwunsch im Rahmen der gegebenen Bedingungen mit möglichst hohem Automatisierungsgrad weitgehend selbsttätig konfigurieren läßt und die momentane Konfiguration, d.h. die Ist-Konfiguration, z.B. für Service-Personal möglichst gut abrufbar und darstellbar ist. Zudem besteht der Wunsch, die jeweilige Ist-Konfiguration im Fall des Austauschs von Systemkomponenten oder der Hinzufügung neuer Komponenten für neue Funktionalitäten ebenfalls weitgehend selbsttätig wiederspruchsfrei rekonfigurieren zu können.

Grundzüge eines Fahrzeugelektrik-Konfigurationssystems sind in der Veröffentlichung I. Kreuz et al., Intelligent Configuring System, Proceedings of the 31st ISATA - Automotive Electronics and New Products, Düsseldorf, Deutschland, 2.-5. Juni 1998 beschrieben. Die dort offenbarte Konfigurierungsprozeßkette beinhaltet einen Satz von entwicklungsseitig vorgegebenen, möglichen Konfigurationen und einen Satz von daraus unter Berücksichtigung von beschränkenden Marketingstrategien abgeleiteten Satz zulässiger Konfigurationen, aus dem dann nach Kundenwunsch eine beauftragte Konfiguration gewonnen werden kann, aus der dann produktionsseitig eine endgültige Istkonfiguration bestimmt wird. Alle genannten Konfigurationen werden in einer als zentrale Wissensbasis fungierenden Datenbank abrufbar abgelegt. Die Informationen über die Istkonfiguration erleichtern dem Servicepersonal die Bestimmung, aus welchen Komponenten, womit vorliegend zusammenfassend Hardware- und Software-Komponenten bezeichnet werden, eine gegebene fahrzeugelektrische Anlage besteht. Sie können zudem zur Generierung einer individuellen Dokumentation über die jeweilige Ist-Konfiguration für das Servicepersonal und für die Erstellung eines individuellen Handbuchs dienen.

Aus der Patentschrift DE 43 15 494 C1 ist ein Fahrzeugelektrik-Konfigurationssystem nach dem Oberbegriff des Anspruchs 1 bekannt. Es verfügt über einen in einem Zentralsteuergerät untergebrachten Fahrzeugkonfigurationsspeicher, aus dem vom Zentralsteuergerät Daten an Steuergeräte zwecks dortiger residenter oder quasi-residenter Speicherung zu übermittelt werden, damit dann ein neu installiertes Steuergerät entsprechend programmiert werden kann. Der Fahrzeugkonfigurationsspeicher kann von einem programmierbaren ROM, z.B. einem FLASHPROM, gebildet sein, um die Konfigurationsdaten nichtflüchtig in einer üblichen Weise zu speichern.

Der Erfindung liegt als technisches Problem die Bereitstellung eines Fahrzeugelektrik-Konfigurationssystems der eingangs genannten Art zugrunde, mit dem es insbesondere möglich ist, dauerhaft in relativ einfacher Weise einen Überblick über die jeweilige Ist-Konfiguration zu gewinnen und/oder eine fahrzeugelektrische Anlage, welche die kundenspezifisch gewünschten Anforderungen erfüllt, benutzerfreundlich mit hohem Automatisierungsgrad zu konfigurieren.

Die Erfindung löst dieses Problem durch die Bereitstellung eines Fahrzeugelektrik-Konfigurationssystems mit den Merkmalen des Anspruchs 1. Weitere Ausführungsbeispiele sind in den den Unteransprüchen und in der Beschreibung enthalten.

Das Fahrzeugelektrik-Konfigurationssystem nach Anspruch 1 beinhaltet charakteristischerweise einen Topologiekonfigurierungs-Systemteil, einen Hardwarekomponentenkonfigurierungs-Systemteil und einen Fahrzeugkonfigurierungs-Systemteil sowie eine graphische Benutzeroberfläche zur wahlweisen Aktivierung des jeweiligen Systemteils und zur menügesteuerten Benutzerführung während der Aktivität des jeweiligen Systemteils. Über den Topologiekonfigurierungs-Systemteil können dem Konfigurationssystem Daten über die Typen von verwendbaren Hardware-Komponenten und deren Datennetzwerkanbindung eingegeben werden. Über den Hardwarekomponentenkonfigurierungs-Systemteil können in der Entwicklungsphase für einen jeweiligen Hardwarekomponententyp zulässige Hardware- und Software-Module bzw. -Bestandteile ausgewählt bzw. neu entwickelt werden. Durch Aktivierung des Fahrzeugkonfigurierungs-Systemteils bewirkt dann das System eine weitgehend oder vollständig automatische Konfigurierung einer optimalen fahrzeugelektrischen Anlage für das von einem Kunden gewünschte Fahrzeug in Abhängigkeit von entsprechenden kundenseitigen Zielvorgaben unter Nutzung der Informationen des Topologiekonfigurierungs-Systemteils und des Hardwarekomponentenkonfigurierungs-Systemteils. Als hierfür taugliche "Konfigurierungsmaschine" ist eine solche herkömmlicher Art einsetzbar, wie sie bislang schon für die Konfigurierung anderer elektronischer Systeme eingesetzt wird.

Bei einem nach Anspruch 2 weitergebildeten System sind Rekonfigurierungsmittel vorgesehen, mit denen eine rechnergestützte automatische Rekonfigurierung einer jeweiligen fahrzeugelektrischen Anlage durchgeführt werden kann, wenn eine Hardware- oder Software-Komponente durch eine neue anderen Typs ersetzt wird, die jedoch mindestens auch die Funktionalität der ersetzten Komponente umfaßt. Des weiteren ist eine solche Rekonfigurierung bei Hinzufügung einer weiteren, bislang nicht im Fahrzeugsystem vorhandenen Funktionalität möglich.

Bei einem nach Anspruch 3 weitergebildeten Konfigurationssystem sind Wissensalterungsmittel vorgesehen, die den abgespeicherten Konfigurationsdaten einen Aktualitätsgrad in Abhängigkeit von deren Alter und Konfigurierungsgebrauchshäufigkeit zuordnen und Konfigurationsdaten aus dem geltenden Konfigurationsdatensatz entfernen, wenn ihr Aktualitätsgrad einen vorgebbaren Schwellwert unterschritten hat. Zusätzlich oder alternativ zu dieser Maßnahme kann die Aktualitätsgradzuweisung von gegebenenfalls vorhandenen Rekonfigurierungsmitteln dazu genutzt werden, immer dann, wenn mehrere mögliche, konkurrierende Komponenten, Konfigurierungsstrategien und/oder Komponentenbeziehungen in Betracht kommen, jeweils zuerst diejenige mit dem höchsten Aktualitätsgrad zu verwenden und nur im Konfliktfall auf solche mit niedrigerem Aktualitätsgrad zurückzugreifen.

Bevorzugte Ausführungsbeispiele der Erfindung sind in den Zeichnungen dargestellt und werden nachfolgend beschrieben. Hierbei zeigen:
- Fig. 1: eine Blockdiagrammdarstellung der Prozeßkette während der automatischen Konfigurierung einer fahrzeugelektrischen Anlage durch ein Fahrzeugelektrik-Konfigurationssystem,
- Fig. 2: eine ausschnittweise Blockdiagrammdarstellung einer automatisch konfigurierten fahrzeugelektrischen Anlage mit mehreren Datenbussen und Steuergeräten sowie einem zentralen Ist-Konfigurationsdatenspeicher,
- Fig. 3: eine schematische Blockdiagrammdarstellung der Datenstruktur für den Ist-Konfigurationsdatenspeicher von Fig. 2,
- Fig. 4: ein Beispiel einer ausschnittweisen bildlichen Wiedergabe einer im Ist-Konfigurationsdatenspeicher abgelegten Ist-Konfiguration in Baumstrukturdarstellung,
- Fig. 5: eine bildliche Wiedergabe einer Ist-Konfiguration in Topologiedarstellung,
- Fig. 6: schematisch eine Einstiegsmaske einer graphischen Benutzeroberfläche zur menügesteuerten Benutzerführung während eines Konfigurierungsvorgangs,
- Fig. 7: eine von der graphischen Benutzeroberfläche bereitgestellte Bildschirmansicht während eines Topologie-Konfigurierungsvorgangs,
- Fig. 8: eine von der graphischen Benutzeroberfläche bereitgestellte Bildschirmansicht zum Starten eines Fahrzeugkonfigurierungsvorgangs und zur Auswahl verschiedener Anzeigefunktionalitäten,
- Fig. 9: eine von der graphischen Benutzeroberfläche bereitgestellte, ausschnittweise Ist-Konfigurationsansicht in Topologiedarstellung,
- Fig. 10: eine von der graphischen Benutzeroberfläche aus den Ist-Konfigurationsdaten bereitgestellte Diagnosemodellansicht und
- Fig. 11: eine schematische Darstellung über einen von dem Konfigurationssystem bewirkten Rekonfigurierungsvorgang.

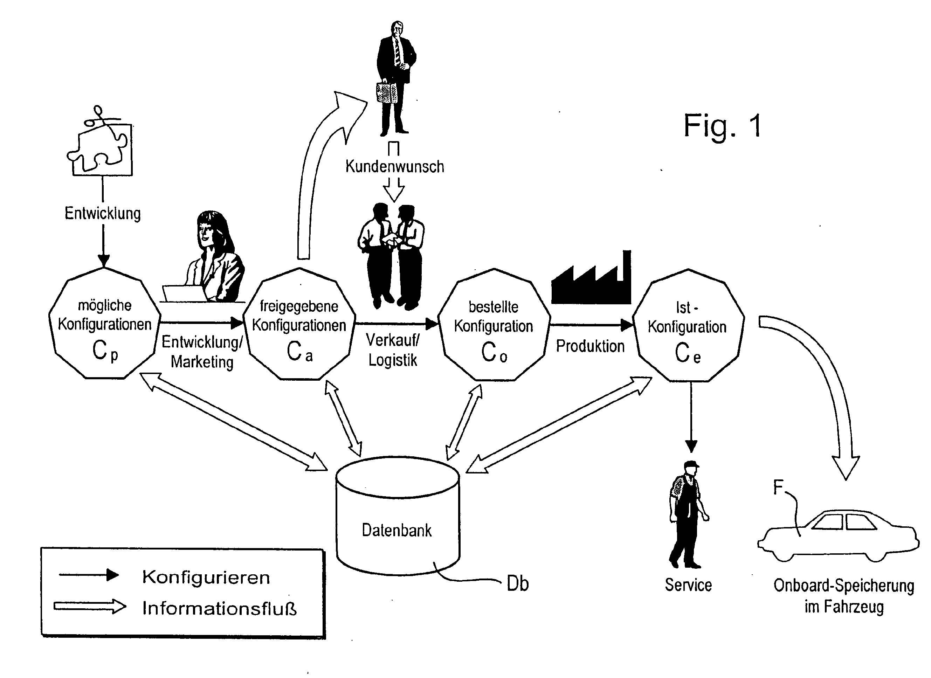

Fig. 1 zeigt ein Fahrzeugelektrik-Konfigurationssystem zur automatisierten Konfigurierung fahrzeugelektrischer Anlagen in ihrer Konfigurierungsprozeßkette bei der Fahrzeugherstellung. Wie daraus ersichtlich, ergibt sich für diesen vorliegenden Fall der Anwendung eines wissensbasierten Konfigurationssystems folgender typische Prozeßablauf.

Die Systementwickler erzeugen diverse Hardware- und Software-Komponenten zur Erfüllung fahrzeugtypischer Funktionalitäten, die dann zusammen mit ihren zugehörigen Komponentenbeziehungen, d.h. den vorhandenen Regeln und Randbedingungen, einen Satz Cp möglicher Konfigurationen ergeben. Dazu werden alle Teilsysteme der fahrzeugelektrischen Anlage, wie Steuergeräte, Aktoren, Sensoren usw., an einer Stelle zentral erfaßt, was auch das Referenzieren von extern verfügbaren Dokumenten, wie Handbuchinformationen oder Diagnosemodulen zu einer Steuergerätfunktion, umfaßt. Hierfür stehen in den Entwicklungsabteilungen Schnittstellen zwischen den bestehenden Systemen zur Erfassung und Freigabe von Systemen für die zentrale Datenhaltung zur Verfügung. Gegebenenfalls fehlende Informationen oder Referenzen werden ergänzt.

Nicht alle möglichen Konfigurationen sind jedoch z.B. aus Marketinggründen und aufgrund länderspezifischer Vorschriften sinnvoll und zulässig, weshalb dementsprechend aus den möglichen Konfigurationen unter Beachtung derartiger Bedingungen ein verbleibender Satz Cₐ erlaubter, freigegebener Konfigurationen gebildet wird. So werden in den Entwicklungs- und Marketing-Abteilungen auch die Regeln und/oder Randbedingungen zur Verbaubarkeit der verschiedenen elektrischen/elektronischen Komponenten erfaßt, wobei es sich z.B. um technische Restriktionen zwecks Verträglichkeit bestimmter Steuergeräte untereinander oder um marktstrategische Restriktionen handeln kann, wonach beispielsweise eine technisch mögliche Funktion erst ab einer bestimmten Mindestausstattung, z.B. Motorisierung, verwendet werden darf. Der Satz von technisch möglichen Konfigurationen Cp und der Satz freigegebener Konfigurationen Cₐ wird somit von Entwicklung und Marketing über die Festlegung des Rahmenhefts, d.h. der geplanten Funktionalitäten, der Vernetzungstopologie, der freigegebenen Steuergeräte und der Baubarkeitsregeln, d.h. der Komponentenbeziehungen und Randbedingungen, definiert. Diese Konfigurationsmengen enthalten daher nicht nur technische Informationen, sondern durch die Regeln und externen Referenzen das gesamte Expertenwissen über die baubaren Produkte.

Aus den freigegebenen Konfigurationen Ca wird nun verkaufsseitig abhängig vom Kundenwunsch die zu einem gewünschten, bestellten Fahrzeug gehörige, optimale bestellte Konfiguration cₒ durch rechnergestützte automatische Konfigurierung abgeleitet. Kriterien für eine optimale Konfigurierung sind z.B. die Kosten, die Datenbuskommunikation und natürlich die Konfliktfreiheit des konfigurierten Systems. In der Produktion wird aus der bestellten Konfiguration c₀ die Ist-Konfiguration cₑ der fahrzeugelektrischen Anlage während des Zusammenbaus des Fahrzeugs aus Einzelkomponenten gewonnen. Insbesondere werden hierzu die geeigneten Hardware-Komponenten, d.h. vorwiegend die diversen Steuergeräte, ausgewählt, und die erforderliche Software implementiert, wozu die benötigten Software-Module beim Konfigurieren geeignet kombiniert und vorzugsweise über eine Flash-Software in das Fahrzeug übertragen werden. Alle genannten Konfigurationen bzw. Konfigurationssätze werden in einer zentralen Datenbank Db abrufbar abgespeichert. Die weitgehend automatisch ermittelte Ist-Konfiguration cₑ steht dann beispielsweise Servicepersonal zur Verfügung.

Der Satz freigegebener Konfiguration Cₐ dient dabei im Verkaufs/Logistikbereich direkt als Wissensbasis für ein wissensbasiertes Konfigurierungssystem, mit dem durch automatisierte Konfigurierung z.B. Informationen zur Erstellung einer Stückliste für die Produktion, einer Kommunikationsmatrix der Steuergeräte an den Datenbussen, eines Gesamtschaltplans aus den Topologieinformationen und den Einzelschaltplänen der Steuergeräte, eines individuellen Benutzerhandbuches und individueller Diagnoseinformationen aus den Diagnosemodulen zu den Steuergeräten generiert werden können. Als Konfigurationsziel dienen dem Konfigurierungssystem die Anforderungen des Kunden an sein Fahrzeug, d.h. der gewünschte Funktionsumfang. Weitergehend kann eine Bedatung der Verkaufssysteme aus den Wissensbanken, d.h. der Menge der erlaubten Konfigurationen Cₐ, vorgesehen sein, indem die Marketingabteilungen zu jeder Funktion bzw. jedem Ausstattungsmerkmal auch die Information für die Verkaufsprospekte angeben, wodurch individuelle Verkaufsprospekte je nach Kundenprofil automatisch generiert werden können. Dabei beschränkt sich das System in diesem Fall nicht allein auf das fahrzeugelektrische Teilsystem.

Die erwähnte Stückliste enthält auch die für die Produktion benötigten Informationen zur Programmierung der Steuergeräte, d.h. die für die Produktion benötigten Software-Module werden bei der Konfigurierung identifiziert und über Referenzen für die Produktion bereitgestellt. Die Stückliste ist der wesentliche Bestandteil der bestellten Konfiguration c₀. Sie kann für die Produktion noch Freiheitsgrade enthalten, um die Lieferbarkeit zu erhöhen. So kann beispielsweise vorgesehen sein, in der Produktion zu entscheiden, daß für bestimmte Funktionen anstelle mehrerer spezieller Steuergeräte einige frei programmierbare Steuergeräte verbaut werden. Auf diese Weise können gewünschte Funktionen durch Programmierung mit Softwaremodulen, die vom Konfigurierungssystem identifiziert werden, verteilt implementiert werden. Auch im Fall, daß diese Vorgehensweise kostenintensiver wäre, kann sie im Einzelfall günstig sein, z.B. um eine schnellere Fahrzeugproduktion bei einem Lieferengpaß eines speziellen Steuergerätes zu erlauben.

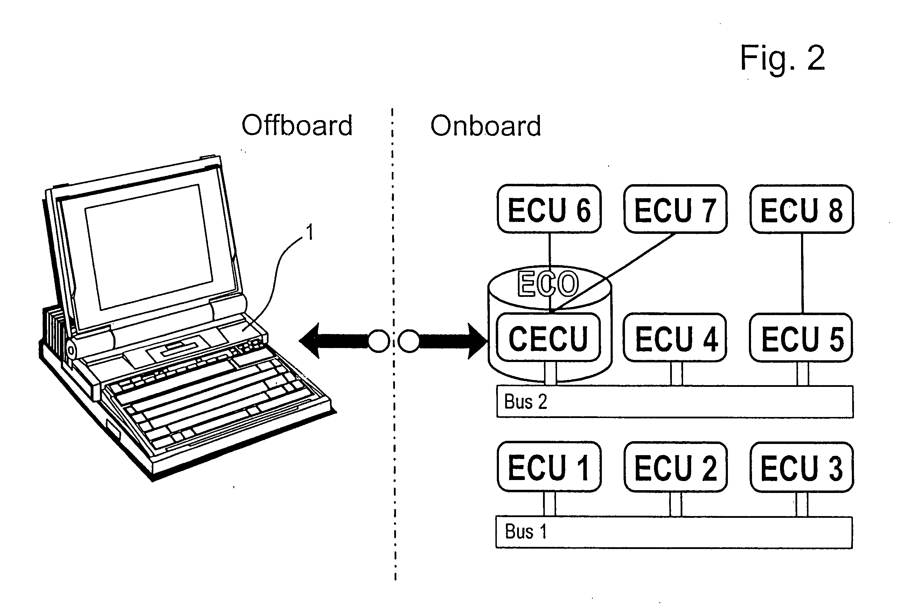

Charakteristischerweise ist eine Onboard-Speicherung der Ist-Konfiguration cₑ der fahrzeugelektrischen Anlage im bestellten Fahrzeug F vorgesehen. Die Onboard-Istkonfigurationsspeicherung erleichtert nicht nur Diagnose- und Wartungsarbeiten, sondern auch die Implementierung neuer (Software-)Funktionalitäten, die Automatisierung von Software-Aktualisierungen und das Erstellen fahrzeugindividueller Handbücher. Sie erlaubt als eine weitere Anwendung die jederzeitige Wertbestimmung des gebrauchten Fahrzeugs. Der Gebrauchtwagenhändler kann die Ist-Konfigurationsdaten aus dem fahrzeugseitigen Ist-Konfigurationsdatenspeicher übernehmen und anhand der Ausstattung den Wiederverkaufswert ermitteln. Die Onboard-Istkonfigurationsspeicherung erfolgt charakteristischerweise im Fahrzeug an einer zentralen Stelle. Wie in Fig. 2 veranschaulicht, wird hierzu neben den übrigen Hardware-Komponenten ECU1, ECU2, ... ein weiteres, zentrales Steuergerät CECU vorgesehen, das einen Flash-Speicherteil, alternativ einen anderen elektronischen Speicher, besitzt, der als Ist-Konfigurationsdatenspeicher ECO fungiert, in welchem die exakte Ist-Konfiguration abgelegt ist, genauer gesagt die zur Bestimmung derselben mindestens benötigten Daten. Die Ist-Konfigurationsdaten beschreiben somit alle elektrischen und elektronischen Hardware- und Software-Komponenten des jeweiligen Fahrzeugs einschließlich ihrer Komponentenbeziehungen. Durch die Onboard-Speicherung der Ist-Konfiguration läßt sich eine hohe Aktualität auch nach mehreren aufeinanderfolgenden Systemänderungen, eine inhärent fahrzeugindividuelle Dokumentation, eine hohe Verfügbarkeit der Ist-Konfiguration als Teil des Fahrzeugs und eine leichte Identifizierung "unsichtbarer" Systemkomponenten, wie Software-Komponenten, erreichen.

Gleichzeitig fungiert das zusätzliche zentrale Steuergerät CECU als Gateway zwischen dem Fahrzeug und der Fahrzeugaußenwelt, d.h. an dieses Steuergerät CECU kann ein fahrzeugexternes System 1 zwecks Datenkommunikation mit dem Fahrzeug angeschlossen werden. Dies kann unter anderem dazu genutzt werden, mit dem fahrzeugexternen System 1 die im Ist-Konfigurationsdatenspeicher ECO des Gateway-Steuergerätes CECU abgelegten Ist-Konfigurationsdaten abzurufen und durch einen geeigneten Browser in einer gewünschten Weise anzuzeigen.

Damit sichergestellt werden kann, daß die im Ist-Konfigurationsdatenspeicher ECO abgespeicherte Ist-Konfiguration auch tatsächlich der real vorliegenden Ist-Konfiguration entspricht, ist vorgesehen, daß jede Steuergerät-Komponente ECU1, ECU2, ... in der Lage ist, sich selbst zu identifizieren, und das zentrale Steuergerät CECU, wie in Fig. 2 dargestellt, direkt oder indirekt mit jedem der anderen Steuergeräte ECU1, ECU2, ... in Kommunikationsverbindung steht, wobei die übrigen Steuergeräte ECU1, ECU2, ... wie üblich mindestens teilweise an einen oder mehrere Datenbusse Bus1, Bus2, ... angeschlossen sind. Die im Ist-Konfigurationsdatenspeicher ECO abgelegten Ist-Konfigurationsdaten können auf diese Weise automatisch mit dem realen System abgeglichen und gegebenenfalls wieder in Übereinstimmung gebracht werden, wenn diese z.B. wegen eines unabsichtlichen Datenspeicherausfalls oder einer Schädigung im zentralen Steuergerät CECU verlorengegangen ist.

Von besonderem Vorteil für die mit der Onboard-Speicherung der Ist-Konfiguration ermöglichte Onboard-Dokumentation ist es, wenn diese selbstbeschreibend ausgelegt ist. Es ist dann auch noch nach langer Zeit möglich, die abgespeicherten Ist-Konfigurationsdaten auszulesen und korrekt zu interpretieren, selbst wenn das den Browser zur Darstellung der Ist-Konfiguration haltende Offboard-System 1 nicht mehr verfügbar ist. Dies läßt sich dadurch erreichen, daß der Ist-Konfigurationsdatenspeicher ECO die Ist-Konfigurationsdaten in einem geeigneten Dateiformat hält und zudem die Informationen zur Definition der Struktur, d.h. Grammatik dieser Datei enthält. Ein geeignetes solches Dateiformat steht mit dem sogenannten XML(Extensible Mark-up Language)-Dateiformat zur Verfügung, das vom W3C (World Wide Web Consortium) veröffentlicht wurde und eine Untermenge von SGML (Standard Generalized Marked-up Language) darstellt. Die Dokumente werden hierbei hierarisch gespeichert und sind maschinenlesbar. So können z.B. Baumstrukturen abgespeichert und deren Inhalte durch Rechner interpretiert werden. Tags werden zur Trennung und Identifizierung von Datenfeldern verwendet und helfen dabei, die Daten selbstbeschreibend zu realisieren.

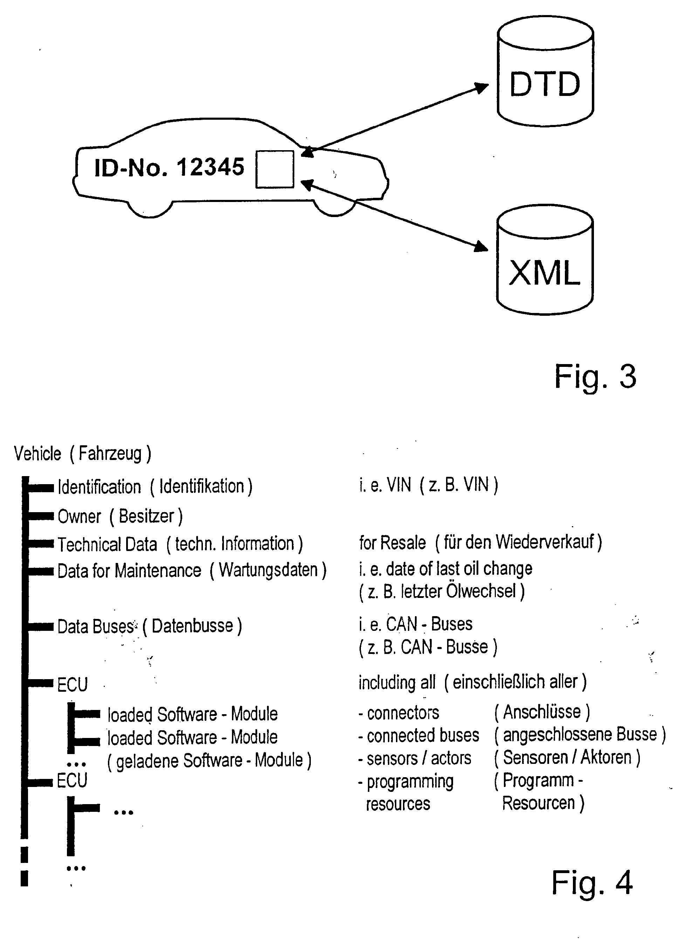

Wie in Fig. 3 beispielhaft für ein Fahrzeug mit einer bestimmten Identifikationsnummer "12345" dargestellt, wird zusammen mit den im XML-Format abgelegten Ist-Konfigurationsdaten die Struktur- bzw. Grammatik-Information der Datei in einer DTD(Document Type Definition)-Datei definiert, die zusammen mit der XML-Datei im Fahrzeug gespeichert ist. Dies garantiert noch nach Jahren eine konsistente, d.h. zutreffende Istkonfigurations-Dokumentation, mit der nicht nur eine dauerhafte Interpretation der Ist-Konfigurationsdaten, sonderen auch deren Modifizierung möglich bleibt.

Für die Darstellung der Ist-Konfiguration sind je nach Systemauslegung verschiedene Möglichkeiten gegeben. Eine erste Möglichkeit in Form einer Baumstrukturdarstellung ist in Fig. 4 ausschnittweise mit einigen Hauptzweigen wiedergegeben. Wie daraus ersichtlich, umfassen die Ist-Konfigurationsdaten in diesem Fall eine Fahrzeugidentifizierungsinformation, eine Information über den Fahrzeugbesitzer, Informationen über technische Daten, wie Leistung, Fahrzeugabmessungen etc., die für den Fall eines Wiederverkaufs nützlich sind, wartungsbezogene Daten, z.B. über den letzten Ölwechsel, und im übrigen die sich auf die eigentliche fahrzeugelektrische Anlage beziehenden Daten über vorhandene Datenbusse und vorhandene Hardware- und Software-Komponenten. Die Daten über die Hardware-Komponenten umfassen nicht nur deren interne Details und die implementierte Software, sondern auch anschließbare Aktuatoren und Sensoren sowie mögliche und benutzte Resourcen wie Leitungsverbindungen, Anschlüsse, Busidentifizierer, Speicherbereiche und CPU-Nutzung. Dies bildet die Basis für eine Überprüfung von Hardware- und Software-Ersatzteilen auf Kompatibilität mit dem restlichen System beim Austausch einer defekten Komponente. Durch die Dokumentation der Funktionen der Software-Module eines Steuergerätes ist auch dessen Funktion selbst dokumentiert. Somit sind in den abgespeicherten Ist-Konfigurationsdaten alle Informationen enthalten, um alle Steuergeräte und Softwaremodule aufzufinden, die in die Ausführung einer jeweiligen Funktionalität involviert sind. Wenn eine bestimmte Funktionalität nicht mehr verfügbar ist, kann folglich eine Serviceabteilung einen Browser für den Ist-Konfigurationsdatenspeicher ECO darauf abfragen, alle hierfür als Ursache in Betracht kommenden Komponenten anzuzeigen.

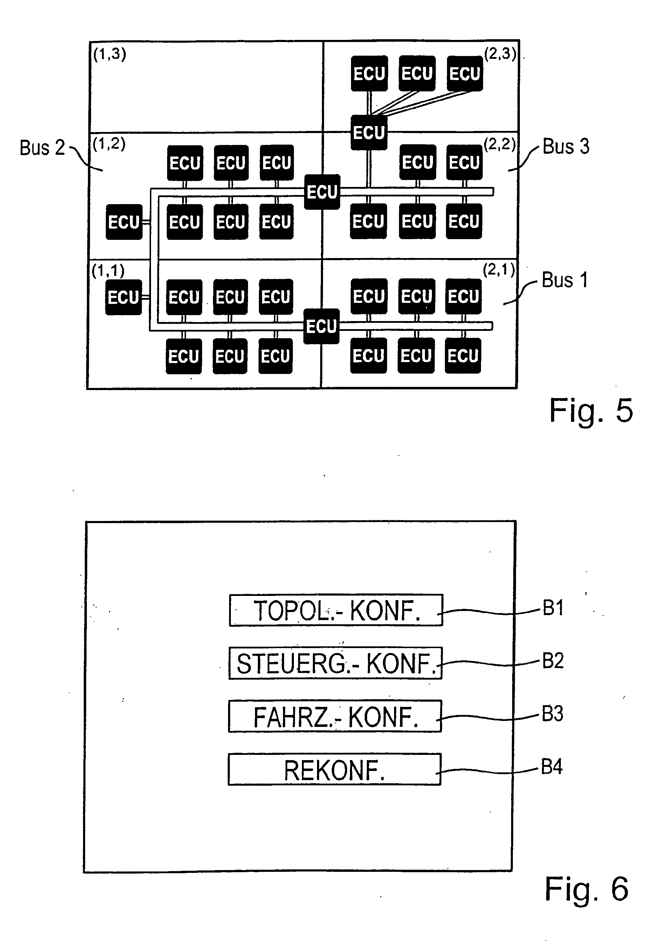

Weitere Darstellungsmöglichkeiten der Ist-Konfiguration sind eine Funktionsdarstellung, die recht einfach durch Sortieren aller Komponenten nach ihrer Funktion und Bildung eines entsprechenden neuen Baumes realisierbar ist, wobei die wurzelnächsten Zweige die Funktionen und die anschließenden Zweige die Hardware- und Software-Komponenten zur Realisierung der jeweiligen Funktion darstellen, sowie eine Topologiedarstellung, wie sie in Fig. 5 beispielhaft angegeben ist. In einer solchen Topologiedarstellung stellen die an Datenbusse angeschlossenen Steuergeräte einen guten Ausgangspunkt zum Navigieren durch die gespeicherten Ist-Konfigurationsdaten dar. Die Information für diese Darstellung kann durch Sortieren der Steuergeräte gemäß ihrer Datenbusanbindung gefunden werden, wobei diejenigen Steuergeräte, die an mehr als einen Datenbus angeschlossen sind, Gateways darstellen. Die Anzeige dieser Topologiedarstellung ist jedoch schwieriger als eine Baumstrukturanzeige. Wenn sich die Datenbusse nicht überschneiden sollen, sind eine exponentiell ansteigende Anzahl von Berechnungsschritten erforderlich, und die Darstellung ist häufig nicht immer leicht verständlich. Vorzugsweise wird daher vorliegend gewisse Information zur leichteren Anzeige dieser Darstellung zusätzlich im Ist-Konfigurationsdatenspeicher ECO angelegt.

Dazu wird ein üblicherweise während der Fahrzeugentwicklung gezeichnetes Bild von Topologien für ein voll ausgerüstetes Fahrzeug in Rechtecke unterteilt, die jeweils höchstens einen Datenbus enthalten und durch Koordinaten identifiziert werden. Der Verlauf eines Datenbusses kann dann in dem Originalbild als Koordinaten der Rechtecke gespeichert werden, die Teile dieses Datenbusses enthalten. Wenn die Topologie des individuellen Fahrzeugs gezeichnet wird, kann der Browser diese für die verschiedenen Datenbusse gespeicherten Koordinateninformationen zur Plazierung der Busse heranziehen. Gateway-Steuergeräte befinden sich an den Kanten zwischen je zwei aneinandergrenzenden Quadraten. Auf diese Weise läßt sich mit relativ geringem Rechenaufwand eine übersichtliche Topologiedarstellung entsprechend Fig. 5 gewinnen. Durch Anklicken einer jeweiligen ECU in dieser Darstellung kann zu zugehöriger Software, zugehörigen Anschlüssen etc. weitergegangen werden. Bevorzugt sind die oben erwähnten und eventuelle weitere, implementierte Darstellungsarten direkt in den zugehörigen Browser codiert. Als zukünftige Entwicklung erscheint in diesem Zusammenhang die Verwendung des XSL(XML Style Language)-Formats, das in naher Zukunft durch W3C bereitgestellt wird, von Interesse. Diese Sprache hilft dabei, Darstellungen von XML-Daten zu definieren, die in einem allgemeinen XML-Browser verwendet werden können.

In den Fig. 6 bis 10 ist anhand schematischer und realer, beispielhafter Bildschirmseiten eine von einer geeigneten graphischen Benutzeroberfläche menügesteuerte, bedienfreundliche Benutzerführung durch das Fahrzeugelektrik-Konfigurationssystem veranschaulicht. Fig. 6 zeigt hierzu schematisch vier Buttons einer Einstiegsmaske, von denen ein erster Button B1 den Zugang zu einer Topologie-Konfigurierung, ein zweiter Button B2 den Zugang zu einer Steuergeräte-Konfigurierung, ein dritter Button B3 den Zugang zu einer Fahrzeug-Konfigurierung und ein vierter Button B4 den Zugang zu einer Fahrzeug-Rekonfigurierung bieten.

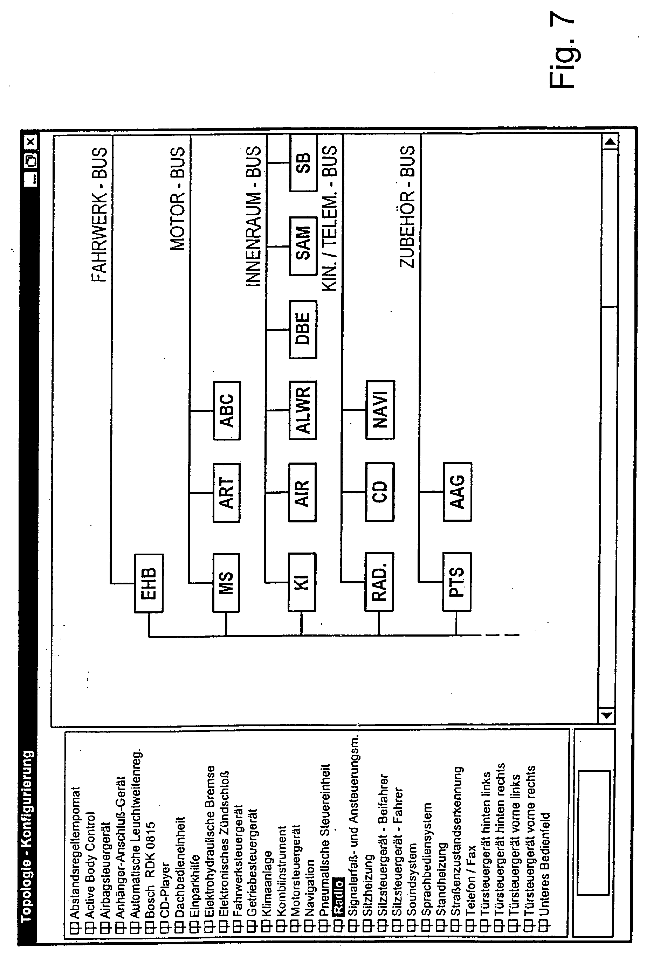

Bei Anklicken des ersten Buttons Bl wird eine Topologie-Konfigurierung aktiviert, während der über jeweilige Bildschirmfenster prinzipielle Vorgaben gemacht werden können, welche Sorten von Steuergeräten verbaut werden und wie diese vernetzt sind. Dies bietet dem Entwickler Unterstützung durch Einbringen von Erfahrungswerten, beispielsweise kann der betreffende Topologiekonfigurierungs-Systemteil Komponenten automatisch zunächst an denjenigen Datenbussen plazieren, an denen sie bisher am häufigsten angeordnet wurden. Fig. 7 zeigt ein typisches reales Bildschirmfenster während der Topologiekonfigurierung, wobei im linken Fensterteil die möglichen Steuergerätesorten auswählbar aufgelistet sind, während im rechten Systemteil schon ausgewählte Steuergerätesorten mit der selbsttätigen Plazierung am jeweiligen Datenbus dargestellt sind. Gezeigt sind beispielhaft eine elektrohydraulische Bremse EHB an einem Fahrwerk-Bus, ein Motorsteuergerät MS, ein Abstandsregeltempomat ART und eine Active-Body-Control ABC an einem Motor-Bus, diverse innenraumbezogene Komponenten an einem Innenraum-Bus, wie Kombiinstrument, Airbagsteuergerät, automatische Leuchtweitenregulierung, Dachbedieneinheit, Signalerfassungs- und Ansteuerungsmodul, Sprachbediensystem, diverse Komponenten an einem KIN/Telematik-Bus, wie Radio, CD-Player und Navigationseinheit, sowie eine pneumatische Steuereinheit und ein Anhänger-Anschluß-Gerät an einem Zubehör-Bus.

In einem nächsten Schritt der menügesteuerten Konfigurierung werden dann durch Aktivierung der Steuergeräte-Konfigurierung in der Entwicklung die zulässigen konkreten Steuergeräte für die diversen Steuergerätesorten freigegeben bzw., soweit noch nicht vorhanden, neu entwickelt. Zu jeder Steuergerätesorte werden zulässige Hardware- und Softwaremodule ausgewählt bzw. neu definiert, z.B. ein geeignetes Motorsteuergerät mit geeigneter zugehöriger Steuersoftware. Für jedes individuelle Steuergerät mit zugehöriger Software werden Eigenschaften und Referenzen zu zugehörigen Dokumentationsorten abgespeichert.

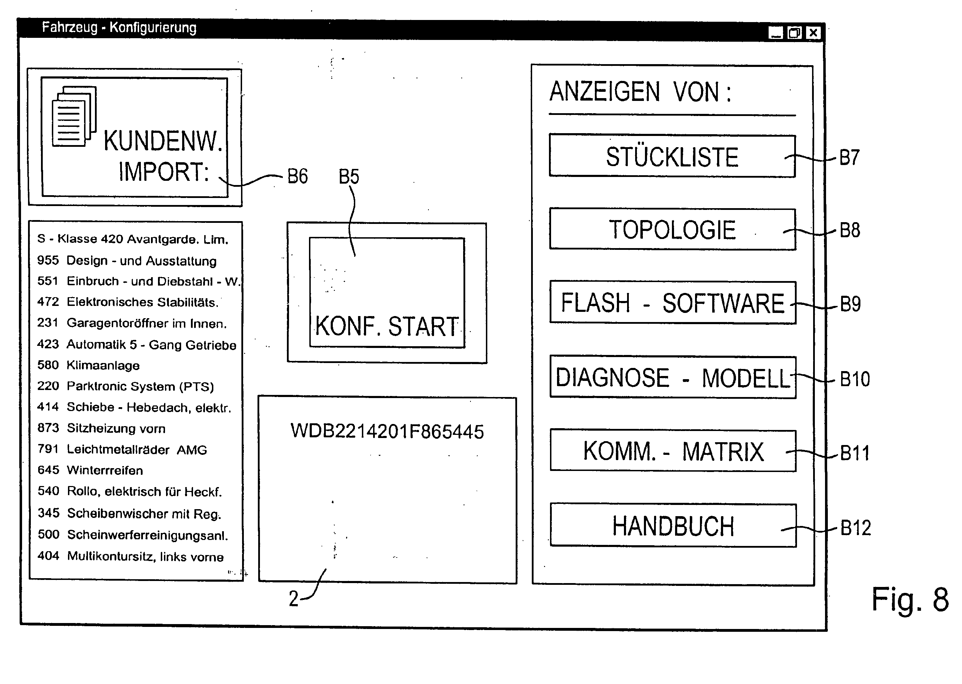

Durch Anklicken des Fahrzeug-Konfigurierungsbuttons B3 läßt sich dann die automatische Erstellung einer Ist-Konfiguration aktivieren, d.h. eine rechnergestützte automatische Konfigurierung des Fahrzeugs mit seinen fahrzeugelektrischen Bestandteilen entsprechend den Informationen aus dem Topologiekonfigurierungs-Systemteil und dem Steuergerätekonfigurierungs-Systemteil unter Berücksichtigung der sich aus den Kundenwünschen ergebenden Zielvorgaben. Ein entsprechendes Menüfenster ist in Fig. 8 schematisch dargestellt. Im mittleren Fensterbereich befindet sich ein Konfigurierungsstart-Button B5, über den ein Konfigurierungsvorgang gestartet werden kann. Im linken Fensterteil B6 kann die Gesamtheit der vom Kunden gewünschten Funktionalitäten ausgewählt werden. Im mittleren, unteren Fensterteil 2 können neben der Fahrzeugidentifikation auch Name und Anschrift des Fahrzeugbesitzers angegeben werden. Im rechten Fensterteil befindet sich eine Anzahl von Anzeigeanforderungs-Buttons zur Aktivierung bestimmter Konfigurierungs- und Anzeigefunktionalitäten.

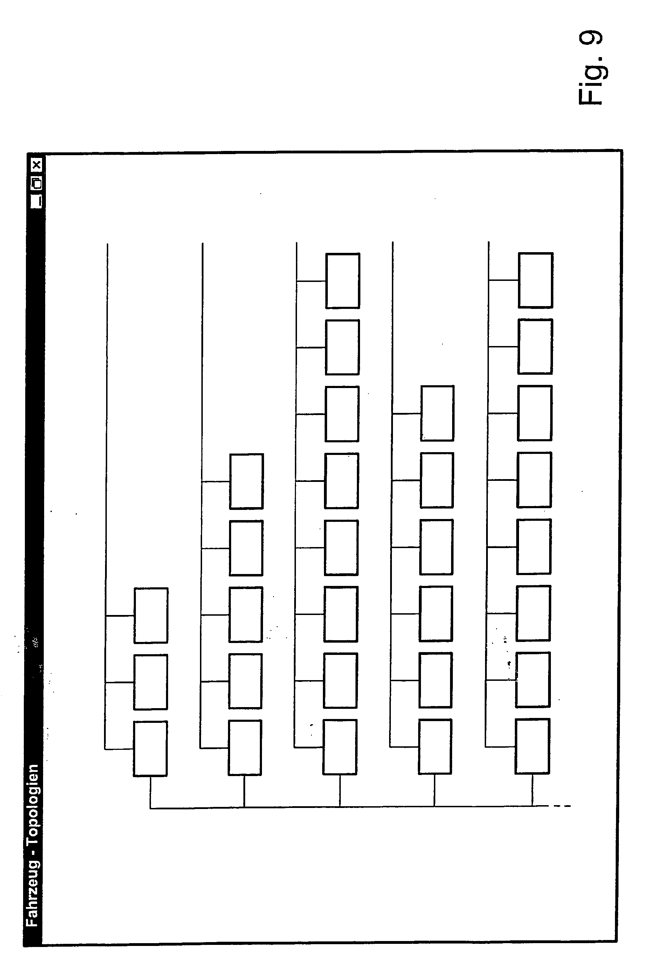

So kann über einen Stückliste-Button B7 die Erstellung einer Stückliste der ermittelten Ist-Konfiguration aktiviert werden. Über einen Topologie-Button B8 kann die Ist-Konfiguration in Topologiedarstellung wiedergegeben werden. Ein Ausschnitt einer solchen Darstellung ist in Fig. 9 wiedergegeben. Wie daraus ersichtlich, entspricht diese Darstellung im Prinzip derjenigen während der Topologie-Konfigurierung gemäß Fig. 7, wobei nun jedoch die für die ermittelte Ist-Konfiguration speziell gewählten, individuellen Steuergeräte wiedergegeben sind, während in Fig. 7 der jeweilige Steuergerättyp dargestellt ist.

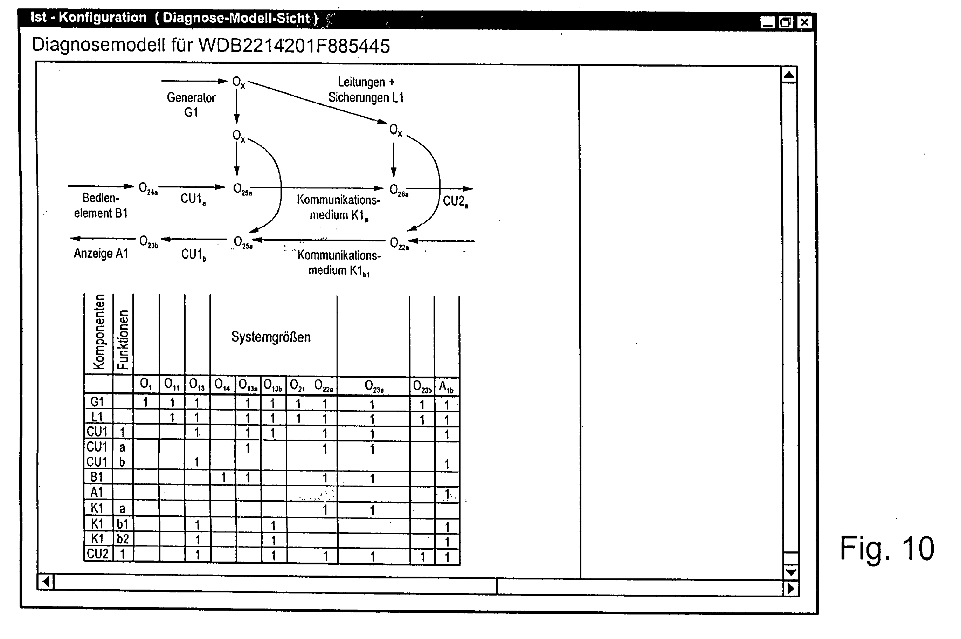

Mit einem Flash-Software-Button B9 können die benötigten Software-Module beim Konfigurieren kombiniert und über eine gängige Flash-Software in das Fahrzeug heruntergeladen werden. Über einen Diagnosemodell-Button B10 kann eine Diagnosemodell-Funktion aktiviert werden, durch welche die referenzierten Diagnose-Module zu einen individuellen Diagnose-Modell für das betreffende Fahrzeug assembliert und angezeigt werden können. Fig. 10 zeigt ausschnittweise eine derartige typische Diagnosemodell-Darstellung, wie sie vom Konfigurierungssystem generiert werden kann.

Des weiteren ist über einen Kommunikationsmatrix-Button B11 die Anzeige der verwendeten Datenbus-Identifier, z.B. CAN-Identifier, als Kommunikations-Matrix aktivierbar. Darüber hinaus enthält die Ist-Konfiguration aber auch Informationen zu allen anderen Resourcen der verwendeten Steuergeräte, wie Speicher, CPU-Leistung, E/A-Anschlüsse usw. Als weitere Funktionalität kann über einen Handbuch-Button B12 eine automatische Handbucherstellung aktiviert werden, mit der die von den Steuergeräten referenzierten Handbuchteile zu einem fahrzeugindividuellen Handbuch kombiniert werden. Der Benutzer erhält somit genau diejenigen Bedienungshinweise, welche die in seinem Fahrzeug auch tatsächlich verbauten Komponenten betreffen, ohne mit überflüssigen Informationen über nicht verwendete Bauteile belastet zu werden. Das auf diese Weise in elektronischer Form vorliegende Handbuch kann bequem am Bildschirm durchgeblättert und bei Bedarf ausgedruckt werden.

Wie aus der anhand der Fig. 7 bis 10 oben erläuterten Menüführung deutlich wird, wird auf diese Weise ein für den Benutzer sehr komfortabler, von einer fensterbasierten graphischen Benutzeroberfläche gesteuerter Fahrzeugkonfigurierungsvorgang bereitgestellt. Eine weitere, über die Einstiegsmaske gemäß Fig. 6 aktivierbare Funktion des Fahrzeugelektrik-Konfigurationssystems besteht in der Möglichkeit einer Neu- bzw. Rekonfigurierung, die über einen zugehörigen Rekonfigurierungs-Button B4 auswählbar ist. Dieser Rekonfigurierungs-Systemteil ist insbesondere dazu verwendbar, die Ist-Konfiguration nach einem Austausch oder einer Hinzufügung einer oder mehrerer Hardware- und/oder Software-Komponenten zu aktualisieren. Im Fall des Komponentenaustauschs ist dies besonders dann von Bedeutung, wenn dieselbe Komponente gegenwärtig nicht verfügbar ist und durch eine solche anderen Typs zu ersetzen ist, welche die geforderte Funktionalität leistet. Diese Ersatzkomponente muß alle für die betreffende Systemkomponente geltenden Abhängigkeiten erfüllen. Der Rekonfigurierungs-Systemteil gibt Unterstützung im Auffinden einer geeigneten Ersatzkomponente. Das über die gegenwärtig im System verbauten Module benötigte Wissen zur Systemkonfigurierung wird von den im Ist-Konfigurationsdatenspeicher des Fahrzeugs als XML-Dokument gespeicherten Ist-Konfigurationsdaten bereitgestellt.

Wenn beispielsweise der Außenspiegel auf der Beifahrerseite mechanisch beschädigt wurde, ist als kleinste austauschbare Einheit die ganze Außenspiegeleinheit einschließlich Stellmotoren und Positionssensoren zusammen mit dem mechanischen Spiegelelement selbst auszutauschen. Das Austauschteil beinhaltet eine mechanisch identische Einheit, kann jedoch eine neuere Version z.B. der Positionssensoren beinhalten, z.B. eine solche mit höherer Auflösung. Bei herkömmlichen Systemen könnte dieses Ersatzteil nicht verwendet werden, da die Software innerhalb seines Steuergerätes nicht zu den Signalen des Positionssensors paßt. Hier bringt der Rekonfigurierungs-Systemteil eine Verbesserung, indem er das für die Positionssteuerung dieses Außenspiegels verantwortliche Softwaremodul in einem anschließenden Schritt als austauschbedürftig identifiziert und in gleicher Weise weitere notwendige Änderungen indiziert. Analog bedingt auch eine Systemaufrüstung mit neuen Funktionalitäten die Hinzufügung neuer Hardware- und Software-Module so, daß nacheinander alle gegenseitigen Abhängigkeiten konfliktfrei erfüllt werden. Durch die Rekonfiguierungsfunktionalität können die erforderlichen Änderungen relativ einfach und fehlerfrei identifiziert werden.

Eine mögliche Realisierung des Rekonfigurierungs-Systemteils besteht hauptsächlich aus zwei Teilen. Den einen Teil bildet eine Wissensbasis, die alles notwendige Wissen über verfügbare Komponenten zusammen mit deren möglichen Parametern, über die Abhängigkeiten zwischen Komponenten, über Strategien für einen erfolgreichen Teileaustausch und darüber enthält, welche Module momentan auf Lager sind. Zur Modellierung des Wissens kann eine objektorientierte Methode verwendet werden, wie z.B. bei dem in der oben zitierten Veröffentlichung von Günter et al. erläuterten KONWERK-Projekt. Der zweite Teil wird von einer mit dem Wissen arbeitenden Inferenzmaschine gebildet, wobei der KONWERK-Kernel eingesetzt werden kann, da er gute Möglichkeiten zur Hinzufügung eigener Strategien bietet. Andererseits ist eine resourcenbasierte Strategie geeignet, da die erwähnten Komponentenabhängigkeiten hauptsächlich in den gegebenen Resourcen der Module begründet sind und daher in sehr adäquater Weise modelliert werden können, siehe zu dieser Thematik z.B. die Veröffentlichung Heinrich et al., The Resource-Based Paradigm: Configuring Technical Systems from Modular Components, AAAI-96 Fall Sympos. Series: Configuration, MIT, Cambridge, MA, 9. bis 11. November 1996, Seite 19.

Wie in der Veröffentlichung Crow et al., Model-Based Reconfiguration: Diagnosis and Recovery, Computer Science Laboratory, Menlo Park, CA 94025 USA, NASA Contractor Report 4596, Mai 1994 beschrieben, kann Rekonfigurierung dazu verwendet werden, ein FDIR-System, d.h. Fehlererkennungs-, Identifizierungs- und Rekonfigurierungs-System, zu erhalten, indem Diagnose und Rekonfigurierung in Systemen mit "Standby"-Ersatzteilen angewendet werden. Im vorliegenden Fall werden hingegen keine "Standby"-Ersatzteile vorausgesetzt, und die Rekonfigurierung ist nicht nur auf den Teileaustausch nach einer Diagnose beschränkt, sondern auch für Systemaufrüstungen geeignet. Ein erster Startpunkt ist ein austauschbedürftiges Teil, z.B. der letzte Schritt in einer FDIR-Prozesskette. Der Systemnutzer identifiziert das Teil, und das Rekonfigurierungssystem entfernt es von der aktuellen, aus der abgespeicherten Ist-Konfiguration ermittelten Systemkonfiguration. Das Konfigurierungssystem stellt dann fest, daß das System nicht mehr vollständig ist. Vollständigkeit bedeutet in diesem Zusammenhang, daß das System die Spezifikation erfüllt, wie sie von dem zuvor im System enthaltenen Funktionensatz gegeben ist und daß alle Abhängigkeiten erfüllt sind. Der zweite Startpunkt betrifft den Fall, daß eine neue Funktionalität hinzufügt werden soll. Auch in diesem Fall ist das System dann nicht mehr vollständig, und zwar als Folge einer geänderten Spezifikation, die aus den bisherigen Funktionalitäten zuzüglich der neu gewünschten Funktionalität besteht.

In beiden Fällen besteht ein Kompositionsschritt des Rekonfigurierungssystems darin, daß es versucht, eine Komponente hinzuzufügen, welche die fehlende Funktionalität bereitstellt. Es kann hierzu denselben Typ des Bauteils auswählen, das der Benutzer zuvor entfernt hat, wenn es noch erhältlich ist und noch nicht anderweitig geordert wurde. Es kann aber auch "beschließen", eine neuere Version des Bauteils oder ein komplett anderes Bauteil auszuwählen, das gegenwärtig auf Lager ist, abhängig von der Strategie und den Optimierungsregeln, die tatsächlich verwendet werden. Um alle Abhängigkeiten zu erfüllen, bedarf es zumeist einer schrittweisen Rekonfiguration. Eine dritte interessante Situation ergibt sich, wenn sich die Regeln/Abhängigkeiten für das System geändert haben, z.B. dadurch, daß in einem späteren Stadium durch Entwicklungsabteilungen neue Abhängigkeiten detektiert und zur Wissensbasis hinzugefügt wurden. Auch das Verbringen des Fahrzeugs in ein anderes Land mit anderen Vorschriften kann ein Grund hierfür sein. In diesem Fall bewirkt das Rekonfigurierungssystem eine Feststellung, ob noch alle Abhängigkeiten erfüllt sind, und initiiert eine schrittweise Rekonfigurierung, wenn dies nicht der Fall ist.

Für den Rekonfigurierungsprozeß gibt es mehrere herkömmliche Möglichkeiten. In der oben genannten Veröffentlichung von Crow et al. wird Rekonfigurierung als eine Analogie zu dem modellbasierten Diagnoseparadigma modelliert, wie es von Reiter formalisiert wurde (R. Reiter, A Theory of Diagnosis from First Principles, Artificial Intelligence, 32(1), April 1987, Seite 57). Vorliegend wird eine Rekonfigurierung favorisiert, die auf einem Mechanismus beruht, der versucht, so viel wie möglich von dem gut erforschten klassischen Konfigurationsparadigma zu verwenden. Dieser Mechanismus besteht darin, Komponenten hinzuzufügen, um eine gewünschte Funktionalität zu erhalten. Der vorliegende Rekonfigurierungsteil dekomponiert das System zusätzlich, wenn ein Konfliktpaar detektiert wird. Dies ist ähnlich zur grundlegenden Konfigurationsmethode mit Rückverfolgung in klassischen Konfigurierungssystemen, wie sie in den oben zitierten Veröffentlichungen von Günter et al. und Heinrich et al. beschrieben sind. Der Unterschied zur normalen Rückverfolgung besteht darin, daß nicht nur solche Teile, die zuvor durch den Algorithmus hinzugefügt wurden, sondern auch solche entfernt werden können, die in das System vor dem Starten des Algorithmus eingebaut wurden.

Als Teile des Algorithmus lassen sich die zwei Phasen Kompositionsphase und Rückverfolgungs- oder Dekompositionsphase unterscheiden. In der Kompositionsphase versucht das Rekonfigurierungssystem eine Komponente zu finden, die wenigstens eine der gewünschten Funktionalitäten bereitstellt. Wenn eine oder mehrere gewünschte Funktionalitäten fehlen, ist zu entscheiden, welche Komponente als nächstes hinzuzufügen ist. Dies kann beispielsweise die Komponente mit der höchsten Anzahl fehlender Funktionen oder mit der geringsten Anzahl von Konfliktpaaren sein. Diese Phase endet, wenn Konfliktpaare auftreten oder das System bezüglich einer gegebenen Spezifikation vollständig ist. In der Dekompositionsphase entfernt das System alle Komponenten, die Teil eines Konfliktpaares sind. Da die Hinzufügung einer Komponente in der Kompositionsphase mehrere Konfliktpaare zur Folge habe kann, besteht die Dekompositionsphase grundlegend aus einer Schleife, in der die zu wenigstens einem Konfliktpaar gehörigen Komponenten identifiziert werden und die gemäß einer bestimmten Optimierungsstrategie als nächstes zu entfernende Komponente ausgewählt und dann entfernt wird, wobei z.B. zuerst diejenigen Komponenten entfernt werden können, die in den meisten Konfliktpaaren enthalten sind. Die Dekompositionsphase endet, wenn es keine Konfliktpaare mehr gibt. Kompositions- und Dekompositionsphase werden in einem Schleifenzyklus abwechselnd ausgeführt, bis das System bezüglich einer gegebenen Spezifikation während der Kompositionsphase vollständig ist.

Da gerade auch bei Fahrzeugen während der Fahrzeuglebensdauer häufig verschiedene Versionen von Hardware- und/oder Software-Komponenten entwickelt werden, ist es nützlich, daß das Rekonfigurierungssystem das Problem solcher verschiedener Versionen von Komponenten auf zweierlei Weise anzugehen vermag. Zum einen kann es prüfen, ob irgendein Konflikt auftritt, wenn eine neuere Version eingesetzt wird, und außerdem dabei helfen, die Konflikte durch Auffinden alternativer Komponenten mit derselben Funktionalität zu lösen. Zum anderen kann es alle Teile, die durch eine neue Version ersetzt werden sollen, selbst wenn sie noch funktionstüchtig sind, identifizieren, wenn eine Bedingung zur Wissensbasis hinzugefügt wird, die besagt, daß das Teil älterer Version selbst einen Konflikt darstellt. Diese beiden Aspekte erfüllt der Rekonfigurierungsalgorithmus ohne zusätzlichen Programmierungsaufwand. Die Komponente der neuen Version ist zu der Wissensbasis als ein verfügbares Teil hinzuzufügen, und die ältere Version ist entweder aus der Wissensbasis zu entfernen oder als nicht mehr erhältlich zu markieren.

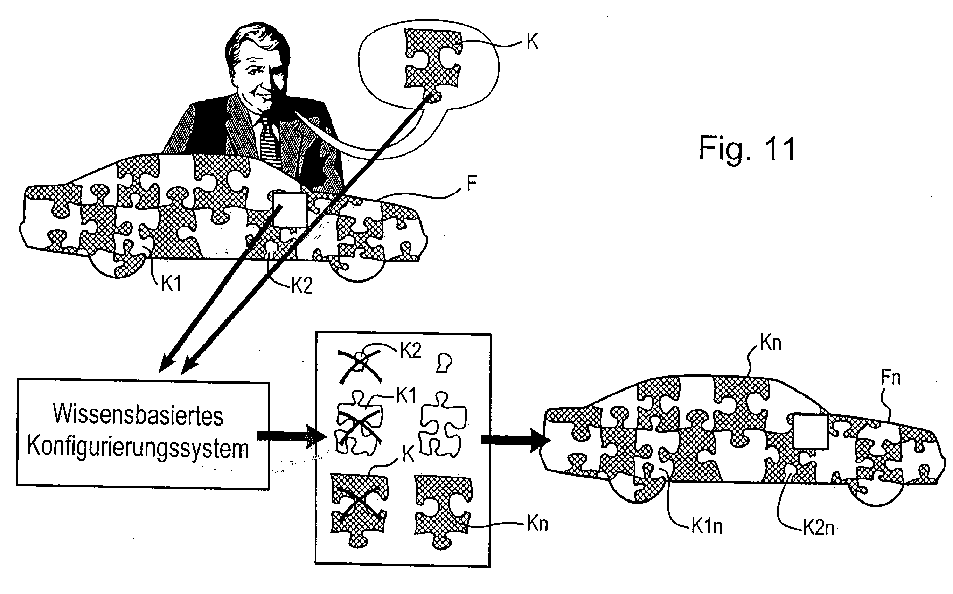

Fig. 11 veranschaulicht bildlich die Rekonfigurierungsfunktion, wobei die Systemkomponenten symbolisch als Puzzleteile des betreffenden Fahrzeugs F wiedergegeben sind. Beispielhaft ist angenommen, daß eine bestimmte Funktionalität oder Komponente K der bestehenden Ist-Konfiguration getauscht werden soll. Das wissensbasierte Konfigurierungssystem ermittelt mit seinem Rekonfigurierungs-Systemteil neben einer neuen Komponente Kn für die in jedem Fall zu tauschende Komponente K weitere neue Komponenten K1n, K2n anstelle entsprechender bisheriger Komponenten K1, K2 so weit, bis wieder konfliktfreie Vollständigkeit des Systems gegeben ist. Durch Austausch der bisherigen mit den selbsttätig neu ermittelten Komponenten sowie gegebenenfalls Hinzufügung zusätzlicher Komponenten wird dann ein neu konfiguriertes Fahrzeug Fn erhalten, das die gewünschten Funktionalitäten besitzt.

Vorzugsweise ist im vorliegenden Fahrzeugelektrik-Konfigurationssystem die Berücksichtigung eines Alterungsaspektes für den Konfigurierungs- bzw. Rekonfigurierungsprozeß vorgesehen. Dies trägt der Tatsache Rechnung, daß sich über die Jahre hinweg nicht nur Versionen von Komponenten, sondern auch das Wissen über Abhängigkeiten oder (Re-)Konfigurierungsstrategien ändern. Die Berücksichtigung von gealtertem Wissen kann den Rekonfigurationsprozeß verbessern, wobei es möglich ist, daß sowohl die Komponenten als auch das Wissen sich kontinuierlich und automatisch ändern und nicht allein sprunghaft durch Übergang auf eine neue Version.

Ein Vorteil der Verwendung von gealtertem Wissen besteht in der Verbesserung der Wissensbasis, indem für längere Zeit nicht benötigtes Wissen automatisch aus ihr entfernt wird. Dies hält die Wissensbasis ausreichend klein und die zugehörige Konfigurationsmaschine entsprechend schnell. In speziellen Fällen, in denen altes Wissen benötigt wird, z.B. zur Rekonstruktion eines Oldtimer-Fahrzeugs, kann es nützlich sein, Backup-Versionen der Wissensbasis zu verwenden, die es erlauben, auf jedes beliebige frühere Datum zurückzugehen.

Ein zweiter wesentlicher Aspekt dafür, eine Alterung des Wissens vorzusehen, besteht in der Möglichkeit, dadurch den Konfigurationsprozeß zu beschleunigen. Denn es ist sehr wahrscheinlich, daß Wissen, welches häufig beim Auffinden einer Lösung geholfen hat und relativ aktuell ist, für die Lösung eines aktuell gestellten Problems am meisten geeignet ist, so daß es plausibel ist, solches Wissen zuerst einzusetzen, das demgemäß als aktuell bezeichnet wird. Dies bedeutet, daß zur Beschleunigung des Konfigurierungs- bzw. Rekonfigurierungsprozesses aktuelle Komponenten und Strategien bevorzugt eingesetzt und aktuelle Abhängigkeiten zuerst überprüft werden.

Zur Alterungsklassifizierung des Wissens wird vorliegend ein Aktualitätsgrad-Parameter act der Form act=usef/age als Quotient eines Parameters usef, der angibt, wie oft das betreffende Wissen zu einer Lösung geführt hat bzw. eine Komponente Teil einer Lösung gewesen ist, und eines Parameters age definiert, der das Alter des Wissens bzw. der Komponente seit der erstmaligen Speicherung in der Wissensbasis angibt. Wenn nun für eine Komponente über eine längere Zeitspanne hinweg dieser Aktualitätsgrad act immer weiter Richtung null abfällt, kann er nach Unterschreitung eines vorgegebenen Schwellwertes aus der aktuell geltenden Wissensbasis entfernt werden.

Bevorzugt kann eine Gewichtung des Nutzungsgrad-Parameters usef relativ zum Alter der betreffenden Komponente vorgesehen sein, indem der Aktualitätsgrad act dann aus der modifizierten Beziehung act=usef^{c}/age ermittelt wird, wobei der Exponent c geeignet festgelegt werden kann. Speziell wird er zur Betonung des Alters auf einen Wert aus dem Intervall zwischen null und eins und zur Betonung des Nutzungsgrades auf einen Wert größer eins gesetzt. Zur Berechnung des Aktualitätsgrades act werden für alles Wissen und alle Komponenten in der Wissensbasis die Parameter usef und das "Geburtsdatum" abgespeichert. Der Exponent c ist für das gesamte System gültig und kann für jeden Rekonfigurationsvorgang neu festgelegt werden, so daß der Systemnutzer dementsprechend die Bedeutung des Alters festlegen kann.

## Patentansprüche

1. Fahrzeugelektrik-Konfigurationssystem zur automatisierten Konfigurierung fahrzeugelektrischer Anlagen, die wenigstens teilweise an ein Datenbusnetzwerk (Bus1, Bus2, ...) angeschlossene Hardware-Komponenten (ECU1, ECU2, ...) und in wenigstens einem Teil der Hardware-Komponenten implementierte Software-Komponenten zur Ausführung zugehöriger Funktionalitäten umfassen,
**dadurch gekennzeichnet, daß**
- es einen Topologiekonfigurierungs-Systemteil (B1) zur Eingabe von Daten über die Typen von verwendbaren Hardware-Komponenten und über deren Datennetzwerkanbindung, einen Hardwarekomponentenkonfigurierungs-Systemteil (B2) zur Auswahl und/oder Neuentwicklung von Hardware-Komponenten des jeweiligen Typs und einen Fahrzeugkonfigurierungs-Systemteil zur rechnergestützten automatischen Konfigurierung einer jeweiligen fahrzeugelektrischen Anlage in Abhängigkeit von festlegbaren Zielvorgaben unter Nutzung des Topologiekonfigurierungs-Systemteils und des Hardwarekomponentenkonfigurierungs-Systemteils umfaßt und
- daß graphische Benutzeroberflächenmittel zur menügesteuerten Benutzerführung während der Aktivität des Topologiekonfigurierungs-Systemteils, des Hardware-Komponentenkonfigurierungs-Systemteils und des Fahrzeugkonfigurierungs-Systemteils vorgesehen sind.

2. Fahrzeugelektrik-Konfigurationssystem nach Anspruch 1, **gekennzeichnet durch**
Rekonfigurierungsmittel (B4) zur rechnergestützten automatischen Rekonfigurierung einer jeweiligen fahrzeugelektrischen Anlage bei Ersatz wenigstens einer Komponente **durch** wenigstens eine neue Komponente entsprechender Funktion aber anderen Typs oder bei Hinzufügung wenigstens einer weiteren Komponente für eine neue Funktionalität oder bei Änderung wenigstens einer Komponentenbeziehung.

3. Fahrzeugelektrik-Konfigurationssystem nach einem der Ansprüche 1 bis 2, weiter
**gekennzeichnet durch**
Wissensalterungsmittel, die den abgespeicherten Konfigurationsdaten einen Aktualitätsgrad (act) in Abhängigkeit von deren Alter (age) und Konfigurierungsgebrauchshäufigkeit (usef) zuordnen, wobei sie die Konfigurationsdaten aus dem geltenden Konfigurationsdatensatz entfernen, wenn deren Aktualitätsgrad einen vorgebbaren Schwellwert unterschritten hat, und/oder wobei im Fall vorhandener Rekonfigurierungsmittel diese während der Rekonfigurierung bei mehreren möglichen Komponenten, Konfigurierungsstrategien und/oder Komponentenbeziehungen jeweils zuerst diejenige mit dem höchsten Aktualitätsgrad verwenden.
